# EUROPÄISCHE PATENTANMELDUNG

(11) **EP 4 808 172 A1**
(43) Veröffentlichungstag der Anmeldung: **16.09.2026**
(21) Anmeldenummer: 26164015.5
(22) Anmeldetag: 11.03.2026
(51) Int. Cl.: H04W 4/40, G06F 21/52, G06F 21/64, G07B 15/06, G07C 5/00, G07C 5/08, G08G 1/052, G08G 1/054

(54) **PRÜFUNG DER INTEGRITÄT MINDESTENS EINES DATENSATZES EINES GESCHWINDIGKEITSÜBERWACHUNGSSYSTEMS**

(30) Priorität: 14.03.2025 EP 25163748
(71) Anmelder: Kistler Holding AG, 8408 Winterthur (CH)
(72) Erfinder: Minkoley, Dennis, 8408 Winterthur (CH); Braner, Sebastian, 88271 Wilhelmsdorf (DE); Mazzotti, Claudio, 8620 Wetzikon (CH); Wendt, Arved, 18246 Jürgenshagen (DE)

(57) **Zusammenfassung**

Die Erfindung betrifft ein Geschwindigkeitsüberwachungssystem, eine Referenzeinrichtung, Referenzdatenverarbeitungsanlage und persistentes Speichermedium; wobei mindestens ein Datensatz eines Geschwindigkeitsüberwachungssystems auf dem persistentem Speichermedium gespeichert ist und mit Hilfe der Referenzeinrichtung geprüft wird. Die Referenzeinrichtung ist ein manipulationsgeschütztes Speichermedium, wobei das Geschwindigkeitsüberwachungssystem eine Geschwindigkeitsmessvorrichtung und eine Bildaufnahmevorrichtung umfasst und wobei die Geschwindigkeitsmessvorrichtung eingerichtet ist eine Geschwindigkeit eines Fahrzeugs auf einer Fahrbahn zu erfassen und wobei die Bildaufnahmevorrichtung eingerichtet ist Bilddaten des Fahrzeugs zu erfassen und bereitzustellen.

## Beschreibung

### Technisches Gebiet

Die Erfindung betrifft eine Referenzeinrichtung für ein Geschwindigkeitsüberwachungssystem und ein Geschwindigkeitsüberwachungssystem sowie ein Verfahren zur Prüfung der Integrität mindestens eines Datensatzes eines Geschwindigkeitsüberwachungssystems.

### Stand der Technik

Ein Geschwindigkeitsüberwachungssystem umfasst üblicherweise mindestens eine Geschwindigkeitsmessvorrichtung, eine Bildaufnahmevorrichtung, und eine Geschwindigkeitsdatenverarbeitungsanlage. Die Geschwindigkeitsdatenverarbeitungsanlage umfasst ein digitales Speichermedium und eine Rechenvorrichtung. Geschwindigkeitsmessvorrichtungen erfassen die Geschwindigkeit eines Fahrzeugs auf einer Fahrbahn und stellen diese als digitale Geschwindigkeitsmessdaten, kurz und im Folgenden Geschwindigkeitsdaten, bereit. Die Bildaufnahmevorrichtung erfasst digitale Bilddaten zumindest eines Teils des Fahrzeugs, beispielsweise des Nummernschilds, der Windschutzscheibe mit Fahrer oder des gesamten Fahrzeugs, und stellt diese bereit. Die Geschwindigkeitsdatenverarbeitungsanlage speichert digital bereitgestellte Geschwindigkeitsdaten und zugehörige digital bereitgestellte Bilddaten zusammen mit einer Systemidentifikation als Fall-Datensatz, auch Falldatei oder Fallakte genannt, im Folgenden kurz Datensatz, auf einem nicht-flüchtigen Speichermedium, auch und im Folgenden als persistentes Speichermedium benannt.

Zertifizierungsanforderungen für Geschwindigkeitsüberwachungssysteme verlangen eine Referenzsoftware, die es Benutzern ermöglicht, die Authentizität und Integrität von Datensätzen zu überprüfen, die mit dem Geschwindigkeitsüberwachungssystem erfasst wurden. Die Datensätze sind üblicherweise digital verschlüsselt. Die Datensätze dokumentieren eine Geschwindigkeitsübertretung, mit den Bilddaten als mindestens ein Beweisfoto des Fahrzeugs und/oder des Nummernschilds und/oder des Gesichts des Fahrers (je nach den Vorschriften des jeweiligen Nationalstaats, in dem das Geschwindigkeitsüberwachungssysteme genutzt wird) zusammen mit den Geschwindigkeitsdaten. Die Verschlüsselung muss Optionen zur Überprüfung enthalten, ob der Datensatz wirklich von diesem bestimmten Geschwindigkeitsüberwachungssystem stammt (Echtheitsnachweis). Daher wird zusätzlich eine Systemidentifikation digital im Datensatz gespeichert. Üblich sind ebenfalls Maßnahmen wie eine Hash-Funktion, auch Hashfunktion, über den Inhalt der Fallakte. Mit Systemidentifikation und Hashfunktion kann überprüft werden, ob der Datensatz geändert wurde (Integritätsnachweis). Datensätze können vom Geschwindigkeitsüberwachungssystem auf einen beliebigen persistenten Speicher übertragen werden, beispielsweise einen Speicher eines Tablets, eines Mobiltelefons oder eines portablen Speichermediums wie eine mobile Festplatte, einen USB-Stick und ähnliches.

Die Datensätze müssen für eine rechtssichere Verwendung als Nachweis für eine Geschwindigkeitsübertretung durch eine Referenzbewertungssoftware auf Integrität geprüft werden, um eine Manipulation des Datensatzes auszuschliessen.

Da die Referenzbewertungssoftware, kurz Referenzsoftware ein wichtiger Bestandteil der Zertifizierung ist, muss sichergestellt werden, dass die Software selbst unverändert bleibt und nicht manipuliert werden kann. Außerdem muss die Software jedes Mal physisch vorgelegt werden, wenn das entsprechende Geschwindigkeitsüberwachungssystem zertifiziert oder neu zertifiziert wird. Der Begriff «zertifiziert» beziehungsweise «Zertifizierung» beinhaltet alle Massnahmen, die Erforderlich sind in einer Jurisdiktion das Geschwindigkeitsüberwachungssystem rechtskonform zu nutzen. Je nach Jurisdiktion sind neben Zertifizierung auch Begriffe wie Konformitätsbewertung oder Erstzulassung gängig. Auch wird zum Teil eine Konformitätserklärung oder ein Zulassungszertifikat durch den Hersteller gefordert. In einigen Ländern unterliegen Geschwindigkeitsüberwachungssysteme der Eichpflicht, die Eichung ist dann als Teil der Zertifizierung zu verstehen. Zertifizierung ist insgesamt als Gesamtheit aller rechtlichen Massnahmen zur rechtssicheren Verwendung des Geschwindigkeitsüberwachungssystems in einer Jurisdiktion zu verstehen.

Die Benutzer/-innen, beispielsweise Polizeibehörden, sind oftmals verpflichtet, alle Falldateien eines Geschwindigkeitsüberwachungssystems mit der Referenzauswertungssoftware zu überprüfen, bevor sie weiterverarbeitet werden, um letztendlich eine Geschwindigkeitsüberschreitung zu bearbeiten und gegebenenfalls Gebührenbescheide auszustellen. Außerdem muss die Referenzsoftware in einigen Fällen später vor Gericht verwendet werden können, um erneut die Authentizität und Integrität eines Datensatzes zu beweisen.

Herstellerinnen von Geschwindigkeitsüberwachungssystemen stellen ihre Referenzsoftware nach dem Stand der Technik auf eine der folgenden Arten zur Verfügung:
- Ein dedizierter zusätzlicher zertifizierter PC mit installierter Referenzbewertungssoftware, der nur für diesen Zweck verwendet wird. Dies darf nicht derselbe PC sein, der zur Steuerung des Geschwindigkeitsüberwachungssystems verwendet wird.
- Eine zertifizierte bootfähige CD (sogenannte Live-Medien), die die Referenzsoftware enthält.

In beiden Fällen erfordert der Arbeitsablauf der Integritätsprüfung eines Datensatzes, dass die Falldateien vom Geschwindigkeitsüberwachungssystem heruntergeladen und auf einen anderen Computer kopiert werden. Obwohl aktuelle Technologie einen Cloud-basierten Softwaredienst zur Zertifizierung ermöglichen würde, wird dies von der Zertifizierungsbehörde nicht akzeptiert, da die Software für die Zertifizierung physisch gespeichert auf Hardware vorhanden sein muss.

Üblich ist im Rahmen der Geschwindigkeitsüberwachung mit mobilen Geschwindigkeitsüberwachungssystem die Integration eines sogenannten "Checkpoints" (Anhaltekommando), auch Kontrollpunkt genannt. Zusätzlich zur Erkennung und Dokumentation von Geschwindigkeitsüberschreitungen mit dem mobilen Geschwindigkeitsüberwachungssystem wird eine weitere Polizeikraft in Fahrtrichtung beabstandet positioniert, um Fahrzeuge anzuhalten, bei denen eine Geschwindigkeitsübertretung festgestellt wurde. Bei Verwendung des Kistler ES 8.0 mobilen Geschwindigkeitsüberwachungssystems kann die Polizeikraft am Standort des Geschwindigkeitsüberwachungssystems den Datensatz oder einen Teildatensatz eines ausgewählten Versto-ßes über eine digitale drahtlose Verbindung, auch Drahtlosnetzwerk genannt, beispielsweise 3G, LTE (4G) oder 5G Mobilfunkstandard oder ein WLAN (wireless local area network) oder dergleichen, an die Polizeikraft am Kontrollpunkt senden. Ein Teildatensatz ist ein Auszug von einigen Daten des Datensatzes. Die Polizeikraft am Kontrollpunkt kann den Datensatz auf einem persistenten Speichermedium speichern und an einem Computer einsehen, nachdem der Datensatz über eine spezielle Softwareanwendung für den Kontrollpunkt erhalten wurde. Es ist jedoch nicht möglich, die Authentizität und Integrität des empfangenen Datensatzes zu prüfen. Dadurch besteht eine rechtliche Einschränkung beim direkten Ausstellen von Gebührenbescheiden bzw. Einziehen von Ordnungsbussen.

Aus Sicht der Polizeibehörden oder anderer Ordnungskräfte ist diese unterschiedliche Hardware zur Steuerung des Geschwindigkeitsüberwachungssystem auf der einen Seite und zur Prüfung der Authentizität und Integrität eines Datensatzes unnötig kompliziert. Im Fall aktueller Verkehrsüberwachungssysteme, beispielsweise des Kistler ES 8.0-Systems, muss ein Laptop eigens für die Ausführung der Referenzsoftware angeschafft werden. Es kann kein anderer, bereits bestehender PC verwendet werden.

Wird eine bootfähige CD bereitgestellt, kann die Polizeikraft zumindest einen eigenen Computer verwenden. Allerdings sind Laptops mit integriertem CD-Laufwerk immer seltener. Zudem ist nicht jedes Betriebssystem mit der Software auf der CD kompatibel. Auch ist ein CD-Laufwerk anfällig für Lesefehler bei Bewegungen, was für einen mobilen Kontrollpunkt hinderlich ist. Zudem ist die Anschaffung eines CD-Laufwerks und die Herstellung einer CD mit der entsprechenden Software in Kleinauflage kostspielig.

Aufgabe der Erfindung ist es die erwähnten Nachteile zu verringern. Polizeikräfte an einem Kontrollpunkt sollen die Möglichkeit haben, die Referenzsoftware einfach und unkompliziert auszuführen, um Datensätze schnell überprüfen zu können.

### Darstellung der Erfindung

Die Aufgabe wird durch die Merkmale der unabhängigen Ansprüche gelöst.

Die Erfindung betrifft eine Referenzeinrichtung, Referenzdatenverarbeitungsanlage und persistentes Speichermedium; wobei mindestens ein Datensatz eines Geschwindigkeitsüberwachungssystems auf dem persistentem Speichermedium gespeichert ist. Die Referenzeinrichtung ist ein manipulationsgeschütztes Speichermedium. Eine Referenzsoftware ist auf dem manipulationsgeschützten Speichermedium gespeichert. Die Referenzsoftware umfasst einen Softwaredienst. Die Referenzeinrichtung ist mit der Referenzdatenverarbeitungsanlage reversibel verbunden. Die Referenzeinrichtung ist mit der Referenzdatenverarbeitungsanlage elektronisch verbunden. Die Referenzdatenverarbeitungsanlage ist eingerichtet die Referenzsoftware zumindest teilweise in einen flüchtigen Speicher der Referenzdatenverarbeitungsanlage zu laden. Die Referenzdatenverarbeitungsanlage ist eingerichtet den mindestens einen Datensatz vom persistenten Speichermedium in den flüchtigen Speicher zu laden. Eine Rechenvorrichtung der Referenzdatenverarbeitungsanlage ist eingerichtet die Integrität des Datensatzes mittels der Referenzsoftware zu bestimmen.

Die Referenzeinrichtung ist erfindungsgemäss ein manipulationsgeschütztes Speichermedium, wobei die Referenzsoftware auf dem manipulationsgeschützten Speichermedium gespeichert ist. Die Integrität der Referenzsoftware ist mit einem solchen Speichermedium gewährleistet. Die Referenzeinrichtung oder auch mehrere Referenzeinrichtungen können für ein bestimmtes Geschwindigkeitsüberwachungssystem konfiguriert werden und physisch einer Zertifizierungsstelle zur Zertifizierung in Verbindung mit dem Geschwindigkeitsüberwachungssystem vorgelegt werden.

Vorteilhaft ist, dass die Referenzeinrichtung mit jeder Referenzdatenverarbeitungsanlage verbunden werden kann, der über einen Anschluss für die Referenzeinrichtung verfügt. Die Verbindung von Referenzeinrichtung und Referenzdatenverarbeitungsanlage erfolgt elektronisch über eine elektronischen Datenkommunikationsschnittstelle. Eine Referenzdatenverarbeitungsanlage ist beispielsweise ein Tablet, auch Tabletcomputer genannt, ein Laptop, auch Notebook genannt, ein Smartphone, oder ein Computer, auch PC genannt.

Die Erfindung umfasst auch ein Verfahren zur Prüfung der Integrität mindestens eines Datensatzes eines Geschwindigkeitsüberwachungssystems. Das Verfahren umfassend eine Referenzeinrichtung, wobei die Referenzeinrichtung ein manipulationsgeschütztes Speichermedium mit einer Referenzsoftware umfasst. Die Referenzsoftware weist einen Softwaredienst auf. Die Referenzeinrichtung wird verfahrensgemäss mit einer Referenzdatenverarbeitungsanlage elektronisch verbunden. Die Referenzdatenverarbeitungsanlage weist einen flüchtigen Speicher und eine Rechenvorrichtung auf. Die Referenzdatenverarbeitungsanlage lädt die Referenzsoftware zumindest teilweise in den flüchtigen Speicher. Die Referenzdatenverarbeitungsanlage ist mit dem persistenten Speichermedium verbunden. Auf dem persistenten Speichermedium ist der mindestens eine Datensatz des Geschwindigkeitsüberwachungssystems gespeichert. Die Referenzdatenverarbeitungsanlage lädt den mindestens einen Datensatz zumindest teilweise in den flüchtigen Speicher und die Rechenvorrichtung führt die Referenzsoftware aus und prüft die Integrität des Datensatzes.

Ein Softwaredienst ist ein computerimplementiertes Computerprogramm und auch als Service, Softwareservice oder Daemon bekannt. Ein Softwaredienst ist üblicherweise eine autarke Einheit, die bestimmte Funktionalitäten über eine definierte Schnittstelle bereitstellt. Der Softwaredienst ist für übliche Betriebssysteme für PC, Laptop, Tablet oder Smartphone mittels Standardsoftware, beispielsweise einer Benutzeroberfläche für Webanwendungen, auch Browser genannt, verfügbar.

Vorteilhaft ist, dass für die Prüfung der Integrität kein spezieller zertifizierter Computer angeschafft werden muss, sondern lediglich eine relativ kostengünstige Referenzeinrichtung in Verbindung mit einer bestehenden Referenzdatenverarbeitungsanlage genutzt werden kann. Dies erlaubt die Nutzung bestehender Referenzdatenverarbeitungsanlagen für die Prüfung der Integrität eines oder mehrerer Datensätze. Die Referenzeinrichtung kann vorteilhafterweise mit jeder Referenzdatenverarbeitungsanlage elektronisch verbunden werden, der über einen Anschluss für die Referenzeinrichtung verfügt. Eine elektronische Verbindung ist beispielsweise ein USB-Anschluss oder eine SD-Karteneinschub.

Vorteilhafterweise ist das manipulationsgeschützte Speichermedium als WORM- (Write Once Read Many) oder ROM-Speicher (Read Only Memory) ausgeführt. Das manipulationsgeschützte Speichermedium kann beispielsweise ein USB-Stick, einer SD-Karte oder einer Micro-SD-Karte sein. Das manipulationsgeschützte Speichermedium verfügt über integrierte Sicherheitsmechanismen die jegliche Änderung oder Löschung der ursprünglich gespeicherten Inhalte verhindern. Die Sicherheitsmechanismen können auf WORM- oder ROM-Technologien oder ähnlichem beruhen. Solche Medien, auch Datenträger genannt, werden beispielsweise durch die Firma Sharp oder die Firma Flexxon als Write-Once-Read-Many WORM Commercial microSD/SD Card oder ROM Memory Card oder durch die Firma SanDisk als SanDisk-SD-WORM Karte angeboten.

Dies hat den Vorteil, dass die Referenzsoftware vor Veränderungen oder Manipulation geschützt ist. Zudem kann die Referenzsoftware problemlos zur Zertifizierung als Hardware in Form des USB-Sticks, der SD-Karte oder der Micro-SD-Karte mit integrierte Sicherheitsmechanismen auf WORM- (Write Once Read Many) oder ROM-Technologie vorgelegt werden. Die Referenzeinrichtung kann derart einfach mit bestehenden Referenzdatenverarbeitungsanlagen elektronisch verbunden werden.

Vorteilhafterweise ist die Referenzsoftware keine eigenständige Softwareanwendung für ein bestimmtes Betriebssystem, sondern ist als Softwaredienst implementiert. Ein Softwaredienst ist beispielsweise ein Webserver.

Dies ist vorteilhaft, da ein Softwaredienst in Form eines Webservers über allgemein gängige Browsersoftware ausgeführt werden kann und daher mit einer Vielzahl von Betriebssystemen kompatibel ist.

Vorteilhafterweise ist die Referenzeinrichtung bootfähig und weist ein Betriebssystem mit einer Benutzeroberfläche für Webanwendungen auf. Dies hat den Vorteil, dass die Referenzeinrichtung an jeder Referenzdatenverarbeitungsanlage genutzt werden kann, ohne dass die Referenzdatenverarbeitungsanlage über ein eigenes Betriebssystem verfügt. Auch ist dies vorteilhaft, da die Kompatibilität von Betriebssystem und der Referenzsoftware sichergestellt ist und zudem sichergestellt ist, dass eine Benutzeroberfläche für Webanwendungen, allgemein auch Browser oder Webbrowser oder Internetbrowser genannt, zur Verfügung steht. Weiter vorteilhaft ist, dass das Betriebssystem für eine direkte Kommunikation mit dem Geschwindigkeitsüberwachungssystem konfiguriert sein kann und eine langwierige Konfiguration des Betriebssystems der Referenzdatenverarbeitungsanlage entfällt. So kann direkt auf einen oder mehrere Datensätze des Geschwindigkeitsüberwachungssystems zugegriffen werden. Insbesondere kann derart eine Referenzeinrichtung mit einer Referenzdatenverarbeitungsanlage an einem Kontrollpunkt (Anhaltekommando) direkt auf einen oder mehrere Datensätze des Geschwindigkeitsüberwachungssystems zugreifen, um am Kontrollposten direkt die Integrität des Datensatzes zu prüfen. Liegt eine Geschwindigkeitsübertretung durch ein Fahrzeug vor, kann nach der Prüfung der Integrität des entsprechenden Datensatzes der Fahrzeuglenkerin oder dem Fahrzeuglenker rechtssicher ein Entsprechender Bescheid ausgestellt werden oder eine allfällige Busse direkt eingezogen werden.

Es ist jedoch auch möglich, mit einer Benutzeroberfläche für Webanwendungen der Referenzdatenverarbeitungsanlage die Referenzsoftware auszuführen. Auch können ein oder mehrere Datensätze von der Geschwindigkeitsüberwachungsanlage auf ein anderes persistentes Speichermedium, beispielsweise eine mobile Festplatte oder einen USB-Stick, auch oder eine SD-Karte oder ähnliches übertragen werden und mit der Referenzdatenverarbeitungsanlage elektronisch verbunden werden. Auch ist es möglich, einen oder mehrere Datensätze auf ein persistentes Speichermedium der der Referenzdatenverarbeitungsanlage zu übertragen und auf den oder die Datensätze mit der Referenzsoftware zuzugreifen. Auch eine drahtlose Übertragung eines oder mehrerer Datensätze vom Geschwindigkeitsüberwachungssystems auf ein persistentes Speichermedium möglich, welches persistentes Speichermedium mit der Referenzdatenverarbeitungsanlage verbunden ist. Insbesondere können derart ein oder mehrere Datensätze des Geschwindigkeitsüberwachungssystems auf das persistente Speichermedium übertragen werden und die Referenzeinrichtung mit der Referenzdatenverarbeitungsanlage an einem Kontrollpunkt (Anhaltekommando) auf dem Datensatz zugreifen.

Das persistente Speichermedium kann auch drahtlos, beispielsweise als Netzlaufwerk oder eine andere Datenfreigabe in einem Drahtlosnetzwerk, beispielsweise mit der Referenzdatenverarbeitungsanlage elektronisch verbunden werden. Die Referenzdatenverarbeitungsanlage kann besonders vorteilhaft am Kontrollpunkt angeordnet sein, der in Fahrrichtung eines Fahrzeuges vom Geschwindigkeitsüberwachungssystems beabstandet angeordnet ist. Die Integrität des Datensatzes ist am Kontrollpunkt mit Referenzdatenverarbeitungsanlage direkt prüfbar. Liegt eine Geschwindigkeitsübertretung durch ein Fahrzeug vor, kann nach der Prüfung der Integrität des entsprechenden Datensatzes der Fahrzeuglenkerin oder dem Fahrzeuglenker rechtssicher ein Entsprechender Bescheid ausgestellt werden oder eine allfällige Busse direkt eingezogen werden.

Besonders vorteilhaft ist die Referenzdatenverarbeitungsanlage identisch mit der Geschwindigkeitsdatenverarbeitungsanlage der Geschwindigkeitsüberwachungsvorrichtung. In diesem Fall kann ein Datensatz direkt nach Aufnahme durch die Referenzsoftware verifiziert werden, indem die Referenzeinrichtung mit der Geschwindigkeitsdatenverarbeitungsanlage elektronisch verbunden wird. Es kann entweder die Geschwindigkeitsdatenverarbeitungsanlage, die identisch mit der Referenzdatenverarbeitungsanlage ist, per Benutzeroberfläche für Webanwendungen der Geschwindigkeitsdatenverarbeitungsanlage auf die Referenzsoftware der Referenzeinrichtung zugreifen. Es kann im Fall einer bootbaren Referenzeinrichtung alternativ auch die Geschwindigkeitsdatenverarbeitungsanlage das Betriebssystem der Referenzeinrichtung starten und über einen dort verfügbare Benutzeroberfläche für Webanwendungen auf die Referenzsoftware zugreifen.

Vorteilhafterweise weist die Referenzsoftware eine programmierbare Schnittstelle auf. Eine programmierbare Schnittstelle wird auch als API (engl.: *application programming interface*) bezeichnet.

Dies hat den Vorteil, dass Polizeibehörden mit selbstverwalteten Computerprogrammprodukten direkt auf die Referenzsoftware zugreifen können ohne die Benutzeroberfläche für Webanwendungen zu nutzen. So kann die Referenzsoftware mit geringem Aufwand in bestehende Softwarelösungen der Polizeibehörden eingebunden werden, beispielsweise in eine Software für Ordnungsbussen nach Prüfung eines Datensatzes bei einer Geschwindigkeitsübertretung.

Das Geschwindigkeitsüberwachungssystem umfasst üblicherweise eine Geschwindigkeitsmessvorrichtung, eine Bildaufnahmevorrichtung und eine Geschwindigkeitsdatenverarbeitungsanlage. Die Geschwindigkeitsdatenverarbeitungsanlage umfasst mindestens ein digitales Speichermedium und mindestens eine Rechenvorrichtung. Die Geschwindigkeitsmessvorrichtung ist eingerichtet eine Geschwindigkeit eines Fahrzeugs auf einer Fahrbahn zu erfassen und als Geschwindigkeitsdaten bereitzustellen. Ebenso ist die Bildaufnahmevorrichtung eingerichtet Bilddaten desselben Fahrzeugs zu erfassen und bereitzustellen. Oft erfolgt die Aufnahme von Bilddaten bei einer festgestellten Geschwindigkeitsüberschreitung. Das Geschwindigkeitsüberwachungssystem ist eingerichtet mindestens einen Datensatz auf dem Speichermedium zu speichern. Üblicherweise ist mindestens ein Datensatz auf dem persistenten Speichermedium gespeichert. Ein Datensatz umfasst mindestens bereitgestellte Geschwindigkeitsdaten des Fahrzeugs und bereitgestellte Bilddaten des Fahrzeugs und eine Systemidentifikation. Vorteilhafterweise ist zu jedem Datensatz eine kryptografische Hashfunktion gespeichert. Kryptographische Hashfunktionen sind spezielle Hashfunktionen, die zur Integritätsprüfung von Dateien und Nachrichten verwendet werden. Hashfunktionen erzeugen aus einem Eingabewert, beispielsweise einem Datensatz, einen festen Wert, den sogenannten Hashwert, kurz HASH, und erfüllen Eigenschaften wie Einwegfunktion, Kollisionsresistenz und Pseudozufälligkeit. Zur Prüfung auf Manipulation eines Datensatzes wird die Hashfunktion auf den Datensatz angewendet und der resultierende HASH mit dem initial gespeicherten unveränderten HASH verglichen. Weicht der neue HASH ab, wurde der Datensatz manipuliert. Um Manipulationen sowohl des Datensatzes als auch des HASH zu verhindern, können schlüsselbasierte Verfahren wie digitale Signaturen oder Message Authentication Codes eingesetzt werden.

Dies ist vorteilhaft um die Datensätze gegen Manipulation zu schützen. Manipulierbare Datensätze entsprechen nicht den Kriterien für rechtssichere Beweismittel in einem rechtlichen Verfahren.

Ein erfindungsgemässes Verfahren zur Prüfung der Integrität mindestens eines Datensatzes eines Geschwindigkeitsüberwachungssystems umfasst, dass die Referenzeinrichtung mit der Referenzdatenverarbeitungsanlage elektronisch verbunden wird. Das Geschwindigkeitsüberwachungssystem umfasst eine Referenzeinrichtung, wobei die Referenzeinrichtung das manipulationsgeschützte Speichermedium mit der Referenzsoftware umfasst. Die Referenzsoftware umfasst weiterhin den Softwaredienst. Die Referenzdatenverarbeitungsanlage umfasst weiterhin den flüchtigen Speicher und die Rechenvorrichtung, auch Prozessor genannt. Die Referenzdatenverarbeitungsanlage lädt die Referenzsoftware zumindest teilweise in den flüchtigen Speicher. Die Referenzdatenverarbeitungsanlage lädt mindestens einen Datensatz in den flüchtigen Speicher. Die Rechenvorrichtung führt die Referenzsoftware aus und prüft die Integrität des Datensatzes.

Ist die Integrität bestätigt, liegt keine Manipulation des Datensatzes vor, so kann der Datensatz für weitere Schritte in einem Geschwindigkeitsübertretungsverfahren verwendet werden.

Vorteilhaft ist, dass für die Prüfung der Integrität kein spezieller zertifizierter Computer angeschafft werden muss, sondern lediglich eine relativ kostengünstige Referenzeinrichtung genutzt werden und die Referenzeinrichtung mit jeder Referenzdatenverarbeitungsanlage verbunden werden kann, der über einen Anschluss für die Referenzeinrichtung verfügt. Weiter vorteilhaft ist, dass die Referenzeinrichtung an jede Referenzdatenverarbeitungsanlage, beispielsweise ein Tablet, auch Tabletcomputer genannt, einen Laptop, auch Notebook genannt, ein Smartphone, oder einen Computer, angeschlossen werden kann, der lediglich über einen Anschluss für die Referenzeinrichtung verfügt, beispielsweise einen USB-Anschluss oder SD-Kartensteckplatz oder micro-SD-Kartensteckplatz oder dergleichen. Die Referenzdatenverarbeitungsanlage kann dabei eine bereits existierende Datenverarbeitungsanlage, wie ein bestehendes Tablet, auch Tabletcomputer genannt, ein bestehender Laptop, auch Notebook genannt, ein bestehendes Smartphone, oder ein bestehender Computer, auch PC genannt, sein. Insbesondere kann die Datenverarbeitungsanlage auch ein Computer sein, der für die Erstellung von Ordnungsbescheiden nach einer Geschwindigkeitsübertretung genutzt wird.

Besonders vorteilhaft ist die Referenzdatenverarbeitungsanlage identisch mit der Geschwindigkeitsdatenverarbeitungsanlage der Geschwindigkeitsüberwachungsvorrichtung. In diesem Fall kann ein Datensatz direkt nach Aufnahme durch die Referenzsoftware verifiziert werden, indem die Referenzeinrichtung mit der Geschwindigkeitsdatenverarbeitungsanlage elektronisch verbunden wird. So können alle Datensätze nach Beendigung einer Messzeit direkt auf dem Gerät geprüft werden, auf dem die Datensätze aufgenommen wurden. Die Referenzeinrichtung stellt eine eigenständige und zertifizierte Software dar, mit der die Prüfung der Datensätze auf Manipulation getrennt von der Software der Geschwindigkeitsdatenverarbeitungsanlage überprüft.

Vorteilhaft umfasst die Referenzdatenverarbeitungsanlage ein Betriebssystem und eine Benutzeroberfläche für Webanwendungen, wobei die Referenzsoftware in der Benutzeroberfläche für Webanwendungen ausgeführt wird. Dies ermöglicht es, direkt von einer beliebigen Referenzdatenverarbeitungsanlage unabhängig von dessen Betriebssystem die Referenzsoftware zu nutzen. Dies hat den Vorteil, dass die Referenzeinrichtung an jeder Referenzdatenverarbeitungsanlage genutzt werden kann, ohne dass die Referenzdatenverarbeitungsanlage über ein eigenes Betriebssystem verfügt. Auch ist dies vorteilhaft, da die Kompatibilität von Betriebssystem und der Referenzsoftware sichergestellt ist und sichergestellt ist, dass eine Benutzeroberfläche für Webanwendungen, allgemein auch Browser oder Webbrowser oder Internetbrowser genannt, zur Verfügung steht.

Vorteilhaft wird im Verfahren zur Prüfung der Integrität mindestens eines Datensatzes eines Geschwindigkeitsüberwachungssystems die Programmierschnittstelle der Referenzsoftware genutzt. Die Referenzdatenverarbeitungsanlage kommuniziert durch die API mit der Referenzsoftware. So kann entweder über die Benutzeroberfläche für Webanwendungen auf der verwendeten Referenzdatenverarbeitungsanlage mit der Referenzsoftware interagiert werden oder über die API die Referenzsoftware abgefragt werden.

Bevorzugt ist im Verfahren zur Prüfung der Integrität mindestens eines Datensatzes eines Geschwindigkeitsüberwachungssystems der Softwaredienst als Webserversoftware ausgeführt.

Das Verfahren zur Prüfung der Integrität mindestens eines Datensatzes eines Geschwindigkeitsüberwachungssystems umfasst ebenfalls die Schritte zur Erzeugung eines Datensatzes, wobei das Geschwindigkeitsüberwachungssystems eine Geschwindigkeit eines Fahrzeugs als Geschwindigkeitsdaten erfasst und zumindest einen Teilbereich des Fahrzeugs als Bilddaten erfasst und wobei mindestens die Geschwindigkeitsdaten, die Bilddaten und eine Systemidentifikation als ein Datensatz auf einem persistenten Speichermedium gespeichert werden.

Dieser Datensatz kann in Folge auch auf andere Speichermedien kopiert werden und von dort aus der Referenzsoftware zugänglich gemacht werden. Datensätze können der Referenzsoftware auch über eine Drahtlosverbindung, lokale kabelgebundene Netzwerke (LAN, local area network), oder andere und entsprechende Freigabe des entsprechenden Speicherortes zugänglich gemacht werden. Datensätze können auch auf einen persistenten Speicher, der mit der Referenzeinrichtung elektronisch verbunden ist, per Drahtlosverbindung, per lokalem kabelgebundenen Netzwerken, wie LAN (local area network), WLAN (wireless local area network), Bluetooth, 3G, 4G, LTE, 5G Mobilfunknetzen und dergleichen, kopiert oder verschoben werden.

Erfindungsgemäss wird im Verfahren zur Prüfung der Integrität eines Datensatzes eines Geschwindigkeitsüberwachungssystems die Integrität des Datensatzes anhand eines im Datensatz bzw. zusammen mit dem Datensatz gespeicherten HASH geprüft.

Im Verfahren zur Prüfung der Integrität eines Datensatzes eines Geschwindigkeitsüberwachungssystems kann ein Datensatz nur bei einem positiven Ergebnis entschlüsselt und zur weiteren Verarbeitung in einer beliebigen Back-Office-Software erneut gespeichert werden. Während dieses Vorgangs kann der Benutzer den Datensatz bzw. die darin enthaltenen Geschwindigkeitsdaten und Bilddaten einzeln visualisieren um zu überprüfen, ob sie gültig sind (z. B. korrekte Messung, Fahrer identifizierbar, Kennzeichen lesbar usw.).

Bevorzugt wird das Geschwindigkeitsüberwachungssystems an einem Messpunkt der Fahrbahn angeordnet. Am Messpunkt kann die Geschwindigkeit eines auf der Fahrbahn fahrenden Fahrzeuges ermittelt werden. Mindestens bei einem Geschwindigkeitsverstoss, beispielsweise einer Geschwindigkeitsüberschreitung, speichert das Geschwindigkeitsüberwachungssystem einen Datensatz auf dem persistenten Speichermedium. Die Referenzeinrichtung wird in einer Ausführungsform bevorzugt an einem Kontrollpunkt der Fahrbahn angeordnet. Der Kontrollpunkt ist in Fahrtrichtung des Fahrzeugs vom Messpunkt beabstandet. Mindestens ein Datensatz des persistente Speichermediums des Geschwindigkeitsüberwachungssystems wird mittels eines Drahtlosnetzwerks auf das persistente Speichermedium , welches mit der Referenzdatenverarbeitungsanlage der Referenzeinrichtung elektronisch verbunden ist, übertragen. Alternativ wird das persistente Speichermedium des Geschwindigkeitsüberwachungssystems per Drahtlosnetzwerk als Datenfreigabe mittels Drahtlosnetzwerk mit der Referenzeinrichtung verbunden. Am Kontrollpunkt wird die Integrität eines oder mehrerer Datensätze geprüft wird. Liegt eine Geschwindigkeitsüberschreitung vor, so kann am Kontrollpunkt das entsprechende Fahrzeug angehalten werden und der entsprechende Datensatz direkt überprüft werden.

### Kurze Beschreibung der Zeichnungen

Im Folgenden wird die Erfindung beispielhaft unter Beizug der Figuren näher erklärt. Es zeigen
- Fig. 1: zeigt eine schematische Darstellung einer Referenzeinrichtung und einer Referenzdatenverarbeitungsanlage,
- Fig. 2: zeigt eine schematische Darstellung eines Datensatzes,
- Fig. 3: zeigt eine schematische Darstellung einer Ausführungsform eines Geschwindigkeitsüberwachungssystems,
- Fig. 4: zeigt eine schematische Darstellung einer weiteren Ausführungsform einer Referenzeinrichtung und einer Referenzdatenverarbeitungsanlage eines Geschwindigkeitsüberwachungssystems,
- Fig. 5: zeigt eine schematische Darstellung einer weiteren Ausführungsform einer Referenzeinrichtung und einer Referenzdatenverarbeitungsanlage eines Geschwindigkeitsüberwachungssystems.

### Wege zur Ausführung der Erfindung

In den Figuren zeigen gleiche Bezugszeichen in den dargestellten Ausführungsformen gleiche Elemente an.

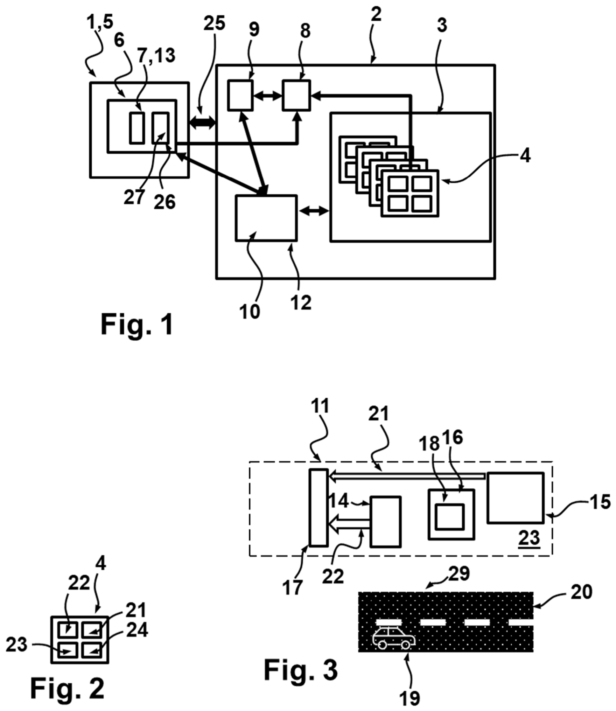

Fig. 1 zeigt eine schematische Darstellung einer ersten Ausführungsform einer Referenzeinrichtung 1 und einer Referenzdatenverarbeitungsanlage 2. Die Referenzeinrichtung 1 ist als manipulationsgeschütztes Speichermedium 5 ausgeführt und über eine Schnittstelle 25 reversibel mit der Referenzdatenverarbeitungsanlage 2 elektronisch verbunden. In der dargestellten Ausführungsform der Fig. 1 ist das persistente Speichermedium 3 in der Referenzdatenverarbeitungsanlage 2 angeordnet. Fig. 1 zeigt mehrere Datensätze 4 eines Geschwindigkeitsüberwachungssystems 10 nach Fig. 3 auf dem persistentem Speichermedium 3 gespeichert. Eine Referenzsoftware 6 ist auf dem manipulationsgeschützten Speichermedium 5 gespeichert und weist einen Softwaredienst 7 auf.

Die Referenzdatenverarbeitungsanlage 2 der in Fig. 1 dargestellten Ausführungsform kann die Referenzsoftware 6 zumindest teilweise in einen flüchtigen Speicher 8 der Referenzdatenverarbeitungsanlage 2 laden. Die Referenzdatenverarbeitungsanlage 2 kann zumindest einen Datensatz 4 vom persistenten Speichermedium 3 in den flüchtigen Speicher 8 laden. Die Rechenvorrichtung 9 der Referenzdatenverarbeitungsanlage 2 bestimmt die Integrität des Datensatzes 4 durch Ausführen der Referenzsoftware 6 zu bestimmen. Im Ausführungsbeispiel der Fig. 1 weist der Softwaredienst 7 eine programmierbare Schnittstelle 13 auf.

Die Referenzsoftware 6 wird in der Benutzeroberfläche für Webanwendungen 10 ausgeführt, wobei die Rechenvorrichtung 9 die Referenzsoftware 6 auf den Datensatz 4 im flüchtigen Speicher 8 anwendet.

Alternativ wird im Ausführungsbeispiel der Fig. 1 statt Betriebssystem 12 mit Benutzeroberfläche für Webanwendungen 10 der Referenzdatenverarbeitungsanlage 2 das Betriebssystem 26 der Referenzeinrichtung 1 durch den Prozessor 9 und den flüchtigen Speicher 8 ausgeführt und die Benutzeroberfläche für Webanwendungen 27 der Referenzeinrichtung 1 genutzt.

Fig. 2 zeigt eine schematische Darstellung eines Datensatzes 4. Der Datensatz 4 weist im dargestellten Ausführungsbeispiel Bilddaten 21, Geschwindigkeitsdaten 22, einen HASH 24 sowie eine Systemidentifikation 23 auf.

Fig. 3 zeigt eine schematische Darstellung des Geschwindigkeitsüberwachungssystems 11 mit einer Systemidentifikation 23 und mit einer Geschwindigkeitsmessvorrichtung 14, welche die Geschwindigkeit des Fahrzeugs 19 auf der Fahrbahn 20 in Form von Geschwindigkeitsdaten 22 ermittelt und bereitstellt. Die Bildaufnahmevorrichtung 15 des Geschwindigkeitsüberwachungssystems 11 nimmt im Fall einer Geschwindigkeitsübertretung ein Beweisfoto mindestens eines Teilbereichs des Fahrzeuges 19 in Form von Bilddaten 21 auf und stellt diese bereit. Die Geschwindigkeitsdatenverarbeitungsanlage 16 steuert Geschwindigkeitsmessvorrichtung 14 und Bildaufnahmevorrichtung 15 und speichert bereitgestellte Bilddaten 21 und Geschwindigkeitsdaten 22 zusammen mit der Systemidentifikation in einem Datensatz 4 auf dem persistenten Speichermedium 17.

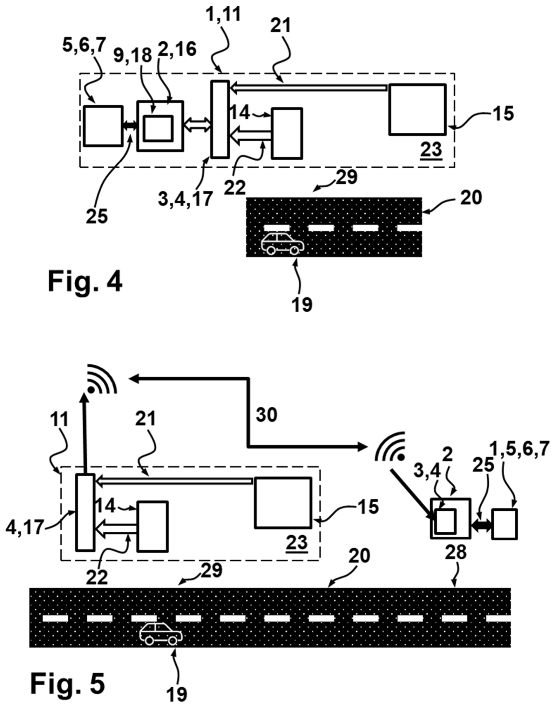

In Fig. 4 ist eine schematische Darstellung einer Ausführungsform einer Referenzeinrichtung 1 und einer Referenzdatenverarbeitungsanlage 2 dargestellt. Die Referenzeinrichtung 1 ist am Geschwindigkeitsüberwachungssystem 11 angeordnet. Die Bildaufnahmevorrichtung 15 des Geschwindigkeitsüberwachungssystems 11 nimmt im Fall einer Geschwindigkeitsübertretung ein Beweisfoto mindestens eines Teilbereichs des Fahrzeuges 19 in Form von Bilddaten 21 auf und stellt diese bereit. Die Geschwindigkeitsdatenverarbeitungsanlage 16 steuert Geschwindigkeitsmessvorrichtung 14 und Bildaufnahmevorrichtung 15 und speichert bereitgestellte Bilddaten 21 und Geschwindigkeitsdaten 22 zusammen mit der Systemidentifikation in einem Datensatz 4 auf dem persistenten Speichermedium 17. Das persistente Speichermedium 17 der Geschwindigkeitsüberwachungsanlage ist zugleich das persistente Speichermedium 3, welches mit der Referenzdatenverarbeitungsanlage 2 der Referenzeinrichtung 1 elektronisch verbunden ist. Das manipulationsgeschützte Speichermedium 5 ist über die Schnittstelle 25 reversibel mit der Referenzdatenverarbeitungsanlage 2 elektronisch verbunden. Die Referenzsoftware 6 ist auf dem manipulationsgeschützten Speichermedium 5 gespeichert und weist den Softwaredienst 7 auf.

In Fig. 5 ist eine schematische Darstellung einer weiteren Ausführungsform einer Referenzeinrichtung 1 und einer Referenzdatenverarbeitungsanlage 2 dargestellt. Die Bildaufnahmevorrichtung 15 des Geschwindigkeitsüberwachungssystems 11 nimmt im Fall einer Geschwindigkeitsübertretung ein Beweisfoto mindestens eines Teilbereichs des Fahrzeuges 19 in Form von Bilddaten 21 auf und stellt diese bereit. Die Geschwindigkeitsdatenverarbeitungsanlage 16 steuert Geschwindigkeitsmessvorrichtung 14 und Bildaufnahmevorrichtung 15 und speichert bereitgestellte Bilddaten 21 und Geschwindigkeitsdaten 22 zusammen mit der Systemidentifikation 23 in einem Datensatz 4 auf dem persistenten Speichermedium 17. Die Referenzeinrichtung 1 ist am Kontrollpunkt 28 der Fahrbahn 20 angeordnet und in Fahrtrichtung des Fahrzeugs 19 vom Messpunkt 29 beabstandet. Einer oder mehrere Datensätze 4 des persistente Speichermediums 17 des Geschwindigkeitsüberwachungssystems 11 sind per Drahtlosnetzwerk 30 auf das persistente Speichermedium 3, welches mit der Referenzdatenverarbeitungsanlage 2 der Referenzeinrichtung 1 elektronisch verbunden ist, übertragbar. Alternativ kann das persistente Speichermedium 17 des Geschwindigkeitsüberwachungssystems per Drahtlosnetzwerk 30 als Netzlaufwerk oder eine andere Datenfreigabe mittels Drahtlosnetzwerk 30 elektronisch verbunden sein, wobei in diesem Fall das persistente Speichermedium 3 ein sogenanntes «virtuelles» persistente Speichermedium 3 ist. Die Referenzeinrichtung 1 ist als manipulationsgeschütztes Speichermedium 5 ausgeführt und über die Schnittstelle 25 reversibel mit der Referenzdatenverarbeitungsanlage 2 elektronisch verbunden. Die Referenzsoftware 6 ist auf dem manipulationsgeschützten Speichermedium 5 gespeichert und weist einen Softwaredienst 7 auf. Derart kann am Kontrollpunkt 28 die Integrität eines oder mehrerer Datensätze 4 geprüft werden, welche Datensätze 4 vorhergehend durch das Geschwindigkeitsüberwachungssystem 11 am Messpunkt 29 erstellt wurden.

### Bezugszeichenliste

- 1: Referenzeinrichtung
- 2: Referenzdatenverarbeitungsanlage
- 3: persistentes Speichermedium
- 4: Datensatz
- 5: manipulationsgeschütztes Speichermedium
- 6: Referenzsoftware
- 7: Softwaredienst
- 8: flüchtiger Speicher
- 9: Rechenvorrichtung, Rechenvorrichtung der Referenzdatenverarbeitungsanlage
- 10: Benutzeroberfläche für Webanwendungen
- 11: Geschwindigkeitsüberwachungssystem
- 12: Betriebssystem (Referenzdatenverarbeitungsanlage)
- 13: programmierbare Schnittstelle
- 14: Geschwindigkeitsmessvorrichtung
- 15: Bildaufnahmevorrichtung
- 16: Geschwindigkeitsdatenverarbeitungsanlage
- 17: persistentes Speichermedium, persistentes Speichermedium des Geschwindigkeitsüberwachungssystems
- 18: Rechenvorrichtung, Rechenvorrichtung der Geschwindigkeitsdatenverarbeitungsanlage
- 19: Fahrzeug
- 20: Fahrbahn
- 21: Bilddaten
- 22: Geschwindigkeitsdaten
- 23: Systemidentifikation
- 24: Hashwert, HASH
- 25: Schnittstelle
- 26: Betriebssystem (Referenzeinrichtung)
- 27: Benutzeroberfläche für Webanwendungen
- 28: Kontrollpunkt
- 29: Messpunkt

## Patentansprüche

1. Geschwindigkeitsüberwachungssystem (11), Referenzeinrichtung (1), Referenzdatenverarbeitungsanlage (2) und persistentes Speichermedium (3); wobei mindestens ein Datensatz (4) des Geschwindigkeitsüberwachungssystems (11) auf dem persistenten Speichermedium (3) gespeichert ist; **dadurch gekennzeichnet, dass** das Geschwindigkeitsüberwachungssystem (11) eine Geschwindigkeitsmessvorrichtung (14), eine Bildaufnahmevorrichtung (15), und eine Geschwindigkeitsdatenverarbeitungsanlage (16) umfasst; wobei die Geschwindigkeitsmessvorrichtung (14) eingerichtet ist eine Geschwindigkeit eines Fahrzeugs (19) auf einer Fahrbahn (20) zu erfassen und als Geschwindigkeitsdaten (22) bereitzustellen; wobei die Bildaufnahmevorrichtung (15) eingerichtet ist Bilddaten (21) des Fahrzeugs (19) zu erfassen und bereitzustellen; wobei das Geschwindigkeitsüberwachungssystem (11) eingerichtet ist mindestens einen Datensatz (4) auf dem persistenten Speichermedium (3) zu speichern; wobei der Datensatz (4) mindestens bereitgestellte Geschwindigkeitsdaten (22) des Fahrzeugs (19) und bereitgestellte Bilddaten (21) des Fahrzeugs (19) und eine Systemidentifikation (23) umfasst; dass das Geschwindigkeitsüberwachungssystem (11) an einem Messpunkt (29) der Fahrbahn (20) angeordnet ist und dass am Messpunkt (29) die Geschwindigkeit des auf der Fahrbahn (20) fahrenden Fahrzeuges (19) ermittelbar ist; dass die Referenzeinrichtung (1) ein manipulationsgeschütztes Speichermedium (5) ist; dass eine Referenzsoftware (6) auf dem manipulationsgeschützten Speichermedium (5) gespeichert ist; dass die Referenzsoftware (6) einen Softwaredienst (7) umfasst; dass die Referenzeinrichtung (1) mit der Referenzdatenverarbeitungsanlage (2) reversibel verbunden ist; dass die Referenzeinrichtung (1) mit der Referenzdatenverarbeitungsanlage (3) elektronisch verbunden ist; dass die Referenzdatenverarbeitungsanlage (2) eingerichtet ist die Referenzsoftware (6) zumindest teilweise in einen flüchtigen Speicher (8) der Referenzdatenverarbeitungsanlage (2) zu laden; dass die Referenzdatenverarbeitungsanlage (2) eingerichtet ist den mindestens einen Datensatz (4) vom persistenten Speichermedium (3) in den flüchtigen Speicher (8) zu laden; und dass eine Rechenvorrichtung (9) der Referenzdatenverarbeitungsanlage (2) eingerichtet ist die Integrität des Datensatzes (5) mittels der Referenzsoftware (6) zu bestimmen; wobei zur Prüfung der Integrität eines Datensatzes eines Geschwindigkeitsüberwachungssystems die Integrität des Datensatzes (5) anhand eines im Datensatz (5) bzw. zusammen mit dem Datensatz (5) gespeicherten HASH (24) prüfbar ist.

2. Geschwindigkeitsüberwachungssystem (11), Referenzeinrichtung (1), Referenzdatenverarbeitungsanlage (2) und persistentes Speichermedium (3) nach dem vorgehenden Anspruch; **dadurch gekennzeichnet, dass** das manipulationsgeschützte Speichermedium (5) als WORM-Speicher (Write Once Read Many) oder ROM-Speicher (Read Only Memory) ausgeführt ist.

3. Geschwindigkeitsüberwachungssystem (11), Referenzeinrichtung (1), Referenzdatenverarbeitungsanlage (2) und persistentes Speichermedium (3) nach einem der vorgehenden Ansprüche; **dadurch gekennzeichnet, dass** die Referenzeinrichtung (1) ein USB-Stick oder eine SD-Karte oder eine Micro-SD-Karte ist.

4. Geschwindigkeitsüberwachungssystem (11), Referenzeinrichtung (1), Referenzdatenverarbeitungsanlage (2) und persistentes Speichermedium (3) nach einem der vorgehenden Ansprüche; **dadurch gekennzeichnet, dass** der Softwaredienst (7) eine Webserversoftware, kurz Webserver, ist.

5. Geschwindigkeitsüberwachungssystem (11), Referenzeinrichtung (1), Referenzdatenverarbeitungsanlage (2) und persistentes Speichermedium (3) nach einem der vorgehenden Ansprüche; **dadurch gekennzeichnet, dass** die Referenzeinrichtung (1) bootfähig ist und ein Betriebssystem (26) mit einer Benutzeroberfläche für Webanwendungen (27) aufweist.

6. Geschwindigkeitsüberwachungssystem (11), Referenzeinrichtung (1), Referenzdatenverarbeitungsanlage (2) und persistentes Speichermedium (3) nach einem der vorgehenden Ansprüche; **dadurch gekennzeichnet, dass** der Softwaredienst (7) eine programmierbare Schnittstelle (13) aufweist.

7. Verfahren zur Prüfung der Integrität mindestens eines Datensatzes (4) eines Geschwindigkeitsüberwachungssystems (11); wobei das Geschwindigkeitsüberwachungssystem (11) eine Geschwindigkeitsmessvorrichtung (14), eine Bildaufnahmevorrichtung (15), und eine Geschwindigkeitsdatenverarbeitungsanlage (16) umfasst; wobei die Geschwindigkeitsmessvorrichtung (14) eingerichtet ist eine Geschwindigkeit eines Fahrzeugs (19) auf einer Fahrbahn (20) zu erfassen und als Geschwindigkeitsdaten (22) bereitzustellen; wobei die Bildaufnahmevorrichtung (15) eingerichtet ist Bilddaten (21) des Fahrzeugs (19) zu erfassen und bereitzustellen; wobei das Geschwindigkeitsüberwachungssystem (11) eingerichtet ist mindestens einen Datensatz (4) auf dem persistenten Speichermedium (3) zu speichern; wobei der Datensatz (4) mindestens bereitgestellte Geschwindigkeitsdaten (22) des Fahrzeugs (19) und bereitgestellte Bilddaten (21) des Fahrzeugs (19) und eine Systemidentifikation (23) umfasst; wobei das Geschwindigkeitsüberwachungssystems (11) eine Referenzeinrichtung (1) umfasst; wobei die Referenzeinrichtung (1) ein manipulationsgeschütztes Speichermedium (5) mit einer Referenzsoftware (6) umfasst; **dadurch gekennzeichnet, dass** die Referenzsoftware (6) einen Softwaredienst (7) umfasst; dass die Referenzeinrichtung (1) mit einer Referenzdatenverarbeitungsanlage (2) elektronisch verbunden wird; dass die Referenzdatenverarbeitungsanlage (2) einen flüchtigen Speicher (8) und eine Rechenvorrichtung (9) umfasst; dass die Referenzdatenverarbeitungsanlage (2) mit dem persistentem Speichermedium (3) verbunden ist; dass auf dem persistenten Speichermedium (3) der mindestens ein Datensatz (4) des Geschwindigkeitsüberwachungssystems (11) gespeichert ist; dass die Referenzdatenverarbeitungsanlage (2) die Referenzsoftware (6) zumindest teilweise in den flüchtigen Speicher (8) lädt; dass die Referenzdatenverarbeitungsanlage (2) den mindestens einen Datensatz (4) zumindest teilweise in den flüchtigen Speicher (8) lädt und dass die Rechenvorrichtung (9) die Referenzsoftware (6) ausführt und die Integrität des Datensatzes (4) prüft; wobei die Referenzsoftware (6) die Integrität des Datensatzes (4) anhand eines im Datensatz (4) gespeicherten HASH (24) prüft oder wobei die Referenzsoftware (6) die Integrität des Datensatzes (4) anhand eines mit dem Datensatz (4) gespeicherten HASH (24) prüft.

8. Verfahren zur Prüfung der Integrität mindestens eines Datensatzes (4) eines Geschwindigkeitsüberwachungssystems (11) nach dem vorgängigen Anspruch; **dadurch gekennzeichnet, dass** die Referenzdatenverarbeitungsanlage (2) ein Betriebssystem (12) und eine Benutzeroberfläche für Webanwendungen (10) umfasst; dass die Referenzsoftware (6) in der Benutzeroberfläche für Webanwendungen (27) ausgeführt wird.

9. Verfahren zur Prüfung der Integrität mindestens eines Datensatzes (5) eines Geschwindigkeitsüberwachungssystems (11) nach einem der beiden vorgängigen Ansprüche; **dadurch gekennzeichnet, dass** die Referenzsoftware (6) eine Programmierschnittstelle (13), kurz API oder «application programming interface», aufweist; und dass die Referenzdatenverarbeitungsanlage (2) durch die programmierbare Schnittstelle (13) mit der Referenzsoftware (6) kommuniziert.

10. Verfahren zur Prüfung der Integrität mindestens eines Datensatzes (4) eines Geschwindigkeitsüberwachungssystems (11) nach einem der drei vorgängigen Ansprüche; **dadurch gekennzeichnet, dass** der Softwaredienst (7) eine Webserversoftware ist.

11. Verfahren zur Prüfung der Integrität mindestens eines Datensatzes (4) eines Geschwindigkeitsüberwachungssystems (11) nach einem der vier vorgängigen Ansprüche; wobei das Geschwindigkeitsüberwachungssystems (11) eine Geschwindigkeit eines Fahrzeugs (19) auf einer Fahrbahn (20) als Geschwindigkeitsdaten (22) erfasst und zumindest einen Teilbereich des Fahrzeugs (19) als Bilddaten (21) erfasst; wobei mindestens die Geschwindigkeitsdaten (22), die Bilddaten (21) und eine Systemidentifikation (23) als ein Datensatz (4) auf dem persistentem Speichermedium (3) gespeichert werden.

12. Verfahren zur Prüfung der Integrität mindestens eines Datensatzes (4) eines Geschwindigkeitsüberwachungssystems (11) nach einem der fünf vorgängigen Ansprüche; wobei der Datensatz (4) verschlüsselt auf dem persistenten Speichermedium (3) gespeichert ist; wobei die Referenzsoftware (6) den Datensatz (4) bei einer positiven Prüfung der Integrität des Datensatzes (4) entschlüsselt und zur weiteren Verarbeitung bereitstellt.

13. Verfahren zur Prüfung der Integrität mindestens eines Datensatzes (4) eines Geschwindigkeitsüberwachungssystems (11) nach einem der beiden vorgehenden Ansprüche, **dadurch gekennzeichnet, dass** das Geschwindigkeitsüberwachungssystems (11) an einem Messpunkt (29) der Fahrbahn (20) angeordnet wird; dass die Referenzeinrichtung an einem Kontrollpunkt (28) der Fahrbahn (20) angeordnet wird; dass das Geschwindigkeitsüberwachungssystem (11) mindestens einen Datensatz (4) auf einem persistenten Speichermedium (17) des Geschwindigkeitsüberwachungssystem speichert; dass der Kontrollpunkt 28 in Fahrtrichtung des Fahrzeugs 19 vom Messpunkt 29 beabstandet ist; dass mindestens ein Datensatz (4) des persistenten Speichermediums (17) des Geschwindigkeitsüberwachungssystems (11) mittels eines Drahtlosnetzwerks (30) auf das persistente Speichermedium (3), welches mit der Referenzdatenverarbeitungsanlage (2) der Referenzeinrichtung (1) elektronisch verbunden ist, übertragen wird oder dass das persistente Speichermedium (17) des Geschwindigkeitsüberwachungssystems (11) per Drahtlosnetzwerk (30) als Datenfreigabe mittels Drahtlosnetzwerk (30) elektronisch verbunden mit der Referenzeinrichtung (1) verbunden wird; und dass am Kontrollpunkt (28) die Integrität eines oder mehrerer Datensätze (4) geprüft wird.
